# EUROPEAN PATENT APPLICATION

(11) **EP 2 123 611 A1**
(43) Date of publication of application: **25.11.2009**
(21) Application number: 07792919.8
(22) Date of filing: 23.08.2007
(51) Int. Cl.: C03B 37/016, C03B 8/02, G02B 3/00

(54) **METHOD FOR MANUFACTURING GRIN LENS**

(71) Applicant: Toyo Glass Co., Ltd., Tokyo 100-0011 (JP)
(72) Inventor: ICHINOSE, Tomomi, Kawasaki-shi Kanagawa 210-0863 (JP); ACHIWA, Toru, Kawasaki-shi Kanagawa 210-0863 (JP); SAWAFUJI, Kouichi, Kawasaki-shi Kanagawa 210-0863 (JP)
(74) Representative: Brown, David Leslie
(86) International application number: PCT/JP2007/066341
(87) International publication number: WO 2009/025051

(57) **Abstract**

[Object] In the manufacture of a GRIN lens using a sol-gel process, foaming during wire-drawing isi prevented and wire-drawing operation is facilitated so that the yield is improved.

[Solving Means] A step of forming a wet gel from an alcohol solution containing, as main components, a silicon alkoxide, a dopant alkoxide, and an aluminum alkoxide; a step of dissolving by leaching the dopant and aluminum away from an outer peripheral surface of the wet gel to provide a refractive index distribution; a step of forming a dry gel by drying the wet gel; a step of forming a glass preform by firing the dry gel; and a step of wire-drawing the perform are provided. In the step of leaching, most aluminum dissolves from the wet gel, thereby increasing the porosity of the dry gel and preventing cracking during sintering and foaming during wire-drawing.

## Description

### Technical Field

The present invention relates to a method for manufacturing a GRIN lens using a sol-gel process.

### Background Art

Optical fiber collimators, each including a GRIN lens (Graded Index Lens) fusion-spliced with an end of an optical fiber, can connect semiconductor lasers to optical fibers with high efficiency and can be used as connectors with low coupling loss, or the like, thus being useful as various optical communication parts.
As a method for manufacturing such a GRIN lens, an ionexchange process, a vapor phase CVD process, or the like is known. A sol-gel process based on low-temperature synthesis is considered to be excellent. For example, Patent Documents 1 and 2 described below each disclose a method for manufacturing a GRIN lens using a sol-gel process. In the method, an acid or base as a solvent is added to an alcohol solution containing a silicon alkoxide (Si(OR)₄ (R: alkyl group)) as a main component, hydrolysis is performed to form a sol, and the sol is further subjected to polycondensation, followed by aging, to proceed crosslinking reaction, thereby forming a wet gel. In the production of a GRIN lens, it is necessary to form a concentration distribution in a dopant (i.e., metal component that provides a refractive index distribution). In a portion having a higher concentration of the dopant, the refractive index is higher. Consequently, the GRIN lens is produced such that the central portion has a high concentration of the dopant, and the concentration decreases toward the outer surface. In one method, a metal alkoxide or a metal salt is used as a material for the dopant. Furthermore, a molecular stuffing technique may be used. In particular, use of an alkoxide of Ti, Ta, Sb, or Zr is significantly useful. In order to form a concentration distribution, leaching is generally performed. In the leaching, a wet gel is immersed in an acid solution, and the dopant in the peripheral portion is dissolved away, thus providing a concentration distribution. The resulting wet gel is dried, the solvent in the gel is removed, and then firing is performed to produce a cylindrical, dense glass preform provided with a refractive index distribution. The resulting glass preform is subjected to wire-drawing to reduce its diameter, and thereby, a GRIN lens is produced.
Patent Document 1: Japanese Unexamined Patent Application Publication No. 2005-115097
Patent Document 2: Japanese Unexamined Patent Application Publication No. 2005-145751

### Disclosure of Invention

### Problems to be Solved by the Invention

In a conventional sol-gel process, a preform is formed using two components, i.e., silicon and a dopant (for example, when the dopant is Ti, SiO₂-TiO₂). However, foaming tends to occur during sintering and wire-drawing, thereby causing a problem of low yield. Foaming during sintering and wire-drawing is significantly related to the bulk density of the dry gel. That is, if the bulk density is large (if the porosity is low), the organic matter and water contained in the dry gel cannot be sufficiently removed during sintering for preparing the preform and thereby cause deficiencies such as cracking and foaming by the thermal hysteresis during the sintering and wire-drawing. Thus, it is critical to decrease the bulk density and to control the bulk density at a desired level.
To date, attempts have been made to control the bulk density by controlling the hydrochloric acid concentration during leaching, the duration of leaching, the temperature of leaching, and the like. However, it has been impossible to simultaneously achieve two effects, namely, formation of a desired refractive index distribution and a low bulk density. Thus, naturally, rendition of a desirable refractive index distribution is prioritized and the bulk density remains undesirably high.

It is an object of the present invention to provide a method for manufacturing a GRIN lens using a sol-gel process, in which foaming is prevented during wire-drawing, and the wire-drawing operation is facilitated and the yield is improved.

### Means for Solving the Problems

A method for manufacturing a GRIN lens according to the present invention is characterized by including a step of forming a wet gel from an alcohol solution containing, as main components, a silicon alkoxide, a dopant alkoxide, and an aluminum alkoxide, a step of dissolving by leaching the dopant and aluminum away from the outer peripheral surface of the wet gel to provide a refractive index distribution, a step of forming a dry gel by drying the wet gel, a step of forming a glass preform by firing the dry gel, and a step of wire-drawing the preform.

In the step of forming the wet gel, the amount of the aluminum alkoxide added is preferably set so that the concentration of elemental aluminum is 1 to 10 mol% on the basis of (elemental silicon + elemental dopant + elemental aluminum).
If the amount is less than 1 mol%, the porosity of the dry gel is not sufficiently high, and the effect of suppressing foaming is decreased.
If the amount exceeds 10 mol%, gelation may occur during preparation of the sol (in the stage where alkoxides or alcohols are being mixed), and there may be a possibility that a wet gel cannot be formed.

In the present invention, the dopant may be one or two or more selected from the group consisting of Ti, Ta, Sb, and Zr. These metals are highly capable of increasing the refractive index, have a coefficient of thermal expansion close to that of silica glass, and alkoxides thereof easily dissolve in an alcohol, thus being excellent as a dopant of the present invention. Furthermore, Sb tends to evaporate in the sintering process of the gel, and Zr precipitates in the process of forming the wet gel, although in a small amount, in an alcohol which is a solvent, thus being unstable in terms of the process. Consequently, Ti and Ta are most desirable as the dopant.

The present invention also provides a GRIN lens characterized in that, in the step of leaching the dopant to provide a refractive index distribution, aluminum oxides as well as the dopant are subjected to leaching so that the aluminum oxide content in the dry gel is less than 0.1 mol%, which is a level that does not substantially contribute to the glass composition.
When a GRIN lens is produced from a wet gel containing an aluminum alkoxide, most aluminum dissolves during the leaching step. Thus, the porosity is high and foaming is suppressed. Meanwhile, the aluminum oxide content in the GRIN lens is about less than 0.1 mol% (average) on an elemental aluminum basis. Thus, the presence of aluminum is negligible from the viewpoint of providing the refractive index distribution. In this respect, the aluminum oxide content may be substantially zero mol%. It is possible in some cases that trace amounts of remaining aluminum helps form a glass skeleton and contributes to increasing the mechanical strength of the preform.

### Advantages

In the method for manufacturing a GRIN lens according to the present invention, in the leaching step, most aluminum dissolves from the wet gel, thereby increasing the porosity. Thus, the dry gel obtained by drying the wet gel also has a high porosity. When the dry gel having a high porosity is sintered, the gas inside the gel escapes through the pores to the outside, and a glass preform substantially free of any gas inside is formed. Accordingly, cracking caused by expansion of the gas inside the gel can be prevented, foaming can be prevented during wire-drawing of the preform, and thus the yield during sintering and wire-drawing can be drastically improved.

### Brief Description of Drawings

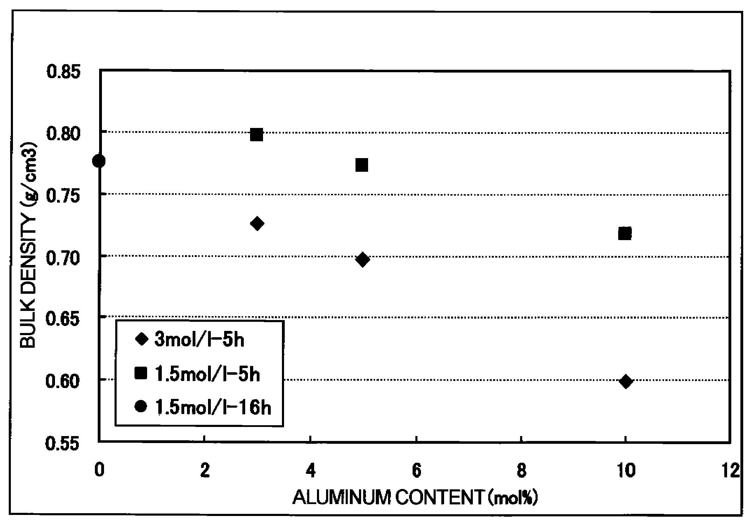

[Fig. 1] Fig. 1 is a graph showing the relationship between the aluminum content (mol%) and the bulk density (g/cm³) of a dry gel (titanium concentration: 3 mol%).

### EXAMPLES

### (Example 1)

To a mixed solution containing 46.68 g of tetramethoxysilane (TMOS), 28.26 g of ethanol, and 12.18 g of dimethylformamide (DMF), 5.86 g of a 1.53 mol/L hydrochloric acid was added, followed by stirring for 60 minutes. Then a mixed solution containing 3.40 g of titanium tetra-n-butoxide, 5.04 g of an aluminum chelate (aluminum disecondary butoxide acetoacetic ester chelate), 11.52 g of ethanol, and 12.18 g of DMF was added thereto, and further 18.20 g of ethanol and 18.58 g of pure water were gradually added under stirring. Thereby, a wet gel including 92 mol% of silicon, 3 mol% of titanium, and 5 mol% of aluminum was obtained. A wet gel having an aluminum content of 3 mol% and a wet gel having an aluminum content of 10 mol% were prepared in the same manner. These wet gels were aged at 60°C for 6 days.
Subsequently, each wet gel was immersed in a 3 mol/L hydrochloric acid for 5 hours, and leaching was performed in which titanium and aluminum were dissolved away from the peripheral portion to impart a titanium concentration distribution to the gel.
Subsequently, the wet gel was dried at 70°C for 4 days and at 120°C for 3 days. Thereby, a dry gel with a diameter of about 7 mm was obtained. The bulk density was about 0.73 (g/cm³) for the gel having an aluminum content of 3 mol%, about 0.70 (g/cm³) for the gel having an aluminum content of 5 mol%, and about 0.60 (g/cm³) for the gel having an aluminum content of 10 mol%. Thus, it was confirmed that the porosity increased with the aluminum content. In the case where the hydrochloric acid concentration during leaching was 1.5 mol/L, 16 hours of immersing was necessary until the bulk density of the dry gel having a desired titanium concentration distribution and free of aluminum reached 0.77 (g/cm³); however, the dry gel of the same quality was obtained after 5 hours of immersing when 5% of aluminum was added.
The resulting dry gel was heated from room temperature to 550°C in an oxygen atmosphere at 9°C/hr, and then to 1,250°C in a helium atmosphere at 7°C/hr to perform firing. Thereby, a transparent glass preform was obtained.
The cylindrical glass preform was wire-drawn to a GRIN lens with a diameter of 125 µm so as to obtain a colorless, transparent GRIN lens. Although the lens could not be formed due to foaming when no aluminum was added, the lens could be produced from preforms containing 5 mol% of aluminum in a yield of 90% because of suppressed foaming.
The amount (average) of aluminum oxides remaining in the GRIN lens was less than about 0.01 mol% on an elemental aluminum basis.

Fig. 1 shows the aluminum content (mol%) and the bulk density (g/cm³) of a dry gel (titanium concentration: 3 mol%) in Example 1 described above. In the graph, the rhombic symbols indicate the case where leaching was conducted for 5 hours with 3 mol/L hydrochloric acid, the square symbols indicate the case where leaching was conducted for 5 hours with 1.5 mol/L hydrochloric acid, and the circular symbols indicate the case where leaching was conducted for 16 hours with 1.5 mol/L hydrochloric acid. The graph shows that the bulk density decreases substantially in proportion to the increase in aluminum content.

### (Example 2)

To a mixed solution containing 43.13 g of tetramethoxysilane (TMOS), 32.632 g of ethanol, and 12.18 g of dimethylformamide (DMF), 5.21 g of a 0.54 mol/L hydrochloric acid was added, followed by stirring for 60 minutes. Then a mixed solution containing 11.35 g of titanium tetra-n-butoxide, 5.34 g of aluminum chelate, 18.43 g of ethanol, and 12.18 g of DMF was added thereto, and further 18.62 g of ethanol and 18.04 g of pure water were gradually added under stirring. Therby, a wet gel including 85 mol% of silicon, 10 mol% of titanium, and 5 mol% of aluminum was obtained. The resulting wet gel was aged at 60°C for 6 days.
ubsequently, the wet gel was immersed in a 1.5 mol/l hydrochloric acid for 16 hours, and leaching was performed in which titanium and aluminum were dissolved away from the peripheral portion to impart a titanium concentration distribution to the gel.
Subsequently, the wet gel was dried at 70°C for 4 days and at 120°C for 3 days. Thereby, a dry gel with a diameter of about 7 mm was obtained. The bulk density was about 0.59 (g/cm'), which confirmed that the porosity was high.
The resulting dry gel was heated from room temperature to 550°C in an oxygen atmosphere at 9°C/hr, and then to 1,250°C in a helium atmosphere at 7°C/hr to perform firing. Thereby, a transparent glass preform was obtained. In the firing step, no breaking or foaming occurred in the glass preform, and the yield was 100%. The glass preform had a square distribution, in which the concentration of titanium was 5 mol% in the central portion and 1 mol% in the peripheral portion, and the concentration of aluminum was less than 0.01 mol% on an average.
The cylindrical glass preform was wire-drawn to a GRIN lens with a diameter of 125 µm. In the wire-drawing step, no foaming was observed and a transparent GRIN lens was obtained in a yield of 100%.
It should be noted here that the bulk density of the dry gel produced by the existing process not using aluminum is 0.77.

In the method for manufacturing a GRIN lens according to the present invention, in the step of forming the wet gel, other additives may be added. For example, it may be possible to add acetylacetone as a stabilizer for titanium so that the titanium alkoxide is suppressed from being crystallized. Furthermore, a phosphorus alkoxide, a boron alkoxide, or the like may be added. By adding additives, such as boron and phosphorus, the thermal expansion ratio of the glass, the shrinkage ratio during sintering, the phase separation region in the glass, the softening point, etc. can be controlled to a certain extent.

## Claims

1. A method for manufacturing a GRIN lens comprising a step of forming a wet gel from an alcohol solution containing, as main components, a silicon alkoxide, a dopant alkoxide, and an aluminum alkoxide; a step of dissolving by leaching the dopant and aluminum away from an outer peripheral surface of the wet gel to provide a refractive index distribution; a step of forming a dry gel by drying the wet gel; a step of forming a glass preform by firing the dry gel; and a step of wire-drawing the perform.

2. The method for manufacturing a GRIN lens according to Claim 1, wherein the concentration of elemental aluminum in the step of forming the wet gel is 1 to 10 mol% on the basis of (elemental silicon + elemental dopant + elemental aluminum).

3. The method for manufacturing a GRIN lens according to claim 1 or 2, wherein the aluminum oxide content in the dry gel after leaching is less than 0.1 mol%.

4. The method for manufacturing a GRIN lens according to Claim 1, 2, or 3, wherein the dopant is one or two or more selected from the group consisting of Ti, Ta, Sb, and Zr.
